# EUROPÄISCHE PATENTSCHRIFT

(11) **EP 1 412 992 B1**
(45) Veröffentlichungstag und Bekanntmachung des Hinweises auf die Patenterteilung: **27.09.2006**
(21) Anmeldenummer: 02754840.3
(22) Anmeldetag: 05.07.2002
(51) Int. Cl.: H01M 2/36

(54) **FÜLLVORRICHTUNG ZUM BEFÜLLEN EINER ZELLE EINES AKKUMULATORS MIT ELEKTROLYTFÜSSIGKEIT SOWIE FÜLLVERFAHREN**
FILLING DEVICE FOR FILLING AN ACCUMULATOR CELL WITH ELECTROLYTIC FLUID AND FILLING METHOD
DISPOSITIF DESTINE AU REMPLISSAGE D'UNE CELLULE D'ACCUMULATEUR AVEC UN LIQUIDE ELECTROLYTIQUE ET PROCEDE DE REMPLISSAGE ASSOCIE

(30) Priorität: 05.07.2001 DE 10132066
(43) Veröffentlichungstag der Anmeldung: 28.04.2004
(73) Patentinhaber: CMW Automation GmbH, 65594 Runkel-Ennerich (DE)
(72) Erfinder: WIPPERFÜRTH, Walter, 65232 Taunusstein (DE)
(74) Vertreter: Müller, Eckhard
(86) Internationale Anmeldenummer: PCT/EP2002/007508
(87) Internationale Veröffentlichungsnummer: WO 2003/005464

(56) Entgegenhaltungen:
- US-A- 2 274 118
- US-A- 5 731 099
- DATABASE WPI Section EI, Week 198444 Derwent Publications Ltd., London, GB; Class S02, AN 1984-274594 XP002239652 -& SU 1 029 273 A (CURRENT SOURCE RES), 15. Juli 1983 (1983-07-15)

## Beschreibung

Die Erfindung betrifft eine Füllvorrichtung zum Befüllen einer Zelle eines Akkumulators mit Elektrolytflüssigkeit mit einem Füllkopf, der über eine Anschlussleitung mit einem Elektrolytflüssigkeits-Reservoir in Verbindung steht und ein Füllrohr besitzt, welches zum Befüllen in oder oberhalb einer Einfüllöffnung der Zelle positionierbar ist, und mit Mitteln zum Rückhalten von überschüssiger Elektrolytflüssigkeit aus dem Füllkopf oder dem Füllrohr nach Beendigen des Befüllens der Zelle.

Bei der Befüllung von Akkumulatoren mittels derartiger Füllvorrichtungen kann es vorkommen, dass beim Absetzen beziehungsweise Entfernen der Füllvorrichtung von der Zelle nach dem Füllvorgang Elektrolytflüssigkeit aus dem Füllkopf beziehungsweise dem Füllrohr nachläuft, was aufgrund der starken Aggressivität der Elektrolytflüssigkeit unerwünscht ist.

Es ist bereits bekannt, nach dem Befüllen der einen oder mehreren Zellen des Akkumulators die Einfüllleitung der Füllvorrichtung an eine Saugpumpe oder Unterdruckwelle anzuschließen, um eventuell noch in den Leitungen verbliebene Elektrolytflüssigkeit abzusaugen. Ganz abgesehen davon, dass an den Innenwandungen der Leitungen der Füllvorrichtung vorhandene Elektrolytflüssigkeit nicht vollständig abgesaugt werden kann, lässt sich die am Ende des Füllrohres bzw. auch an der Außenwandung des Füllrohres haftende Elektrolytflüssigkeit praktisch nicht entsorgen.

Eine andere bekannte Lösung besteht darin, das freie Ende des Füllrohres mit einem Ventilkörper zu verschließen. Bei Akkumulatoren mit größeren Einfüllöffnungen stellt dies eine praktikable Lösung dar. Dagegen ist diese bekannte Lösung bei Akkumulatoren mit kleinen Einfüllöffnungen nicht realisierbar.

Die Veröffentlichung US-A-5731099 offenbart eine Füllvorrichtung für Akkumulatoren mit einem Verteiler an dem axial verschiebbar gelagert ein Füllrohr angeordnet ist, wobei das Füllrohr zum Füllen einer Zelle des Akkumulators mit Elektrolytflüssigkeit dient.

Ausgehend von der Füllvorrichtung mit den eingangs genannten Merkmalen liegt der Erfindung die Aufgabe zugrunde, eine Füllvorrichtung dahingehend weiterzubilden, dass ein Nachtropfen der Elektrolytflüssigkeit nach der Beendigung des Einfüllvorganges sicher vermieden ist.

Diese Aufgabe wir bei der Erfindung bei der Füllvorrichtung mit den eingangs genannten Merkmalen im wesentlichen dadurch gelöst, dass das Füllrohr ein Anschlussstück aufweist, welches mit den Mitteln zum Rückhalten von überschüssiger Elektrolytflüssigkeit verbunden oder mit diesen Mitteln versehen ist. und welches entlang des Füllrohres von einer abgesenkten Position im Bereich des freien Endes des Füllrohres hin zu einer angehobenen Position weg vom freien Ende verstellbar ist.

Aufgrund dieser Maßnahme wird dafür Sorge getragen, dass nach Beendigung des Füllvorganges überschüssige Elektrolytflüssigkeit über das Anschlussstück vom freien Ende des Füllrohres zurückgehalten werden kann, so dass es nicht zu einem Nachlaufen von Elektrolytflüssigkeit kommt. Insbesondere wird nicht nur die an der Innenwandung des Füllrohres, sondern auch an der Außenwandung des Füllrohres haftende Elektrolytflüssigkeit sicher entfernt wird.

Während des eigentlichen Füllvorganges zum Befüllen der Zelle ist das Anschlussstück von der abgesenkten Position im Bereich des freien Endes des Füllrohres in eine angehobene Position weg vom freien Ende überführt, so dass das Füllrohr zum Füllen der Zelle in herkömmlicher Weise einfach in die Einfüllöffnung der Zelle abgesenkt werden kann. Nach Beendigung des Füllvorganges wird dann das Anschlussstück von Vorteil selbsttätig aus dieser angehobenen Position wieder in die abgesenkte Position überführt, so dass die am Füllrohr haftende Elektrolytflüssigkeit im Bereich des freien Endes zurückgehalten und/oder abgezogen werden kann. Diese Füllvorrichtung eignet sich für jede Art von Zellen, seien es Zellen mit großen oder kleinen Einfüllöffnungen, da während des eigentlichen Füllvorganges das Anschlussstück in die angehobene Position überführt und lediglich in herkömmlicher Weise das Füllrohr in die Einfüllöffnung der Zelle einzubringen ist.

Nach einer ersten vorteilhaften Ausgestaltung der Erfindung ist es vorgesehen, dass das Anschlussstück das Füllrohr, insbesondere eine Außenwandung des Füllrohres, ring- oder manschettenförmig umfasst und axial verschiebbar am Füllrohr gelagert ist. Insoweit wirkt das Anschlussstück sozusagen als ein auf einer Stange, nämlich dem Füllrohr, verschiebbar gelagerter Kolben, der von der abgesenkten Position in die angehobene Position dadurch überführt wird, dass eine untere Stirnseite des Kolbens sich an einer Stirnwandung der Zelle abstützt, während die Kolbenstange beziehungsweise das Füllrohr in die Einfüllöffnung der Zelle abgesenkt wird. Beim Anheben des Füllkopfes nach Beendigung des Füllvorganges senkt sich dann das Anschlussstück beziehungsweise der Kolben bevorzugt selbsttätig wieder in die abgesenkte Position, beispielweise aufgrund der auf das Anschlussstück wirkenden Schwerkraft, ab.

Von Vorteil weist das Anschlussstück einen Axialkanal oder eine Axialbohrung auf, in der das Füllrohr bevorzugt im wesentlichen bündig aufgenommen ist. Aufgrund dieser Maßnahme ist eine sichere und im wesentlichen spielfreie Axialführung des Anschlussstücks an dem Füllrohr gegeben.

Nach einer besonderen Ausführungsform der Erfindung ist es vorgesehen, dass die Mittel zum Rückhalten von überschüssiger Elektrolytflüssigkeit von dem Anschlussstück gebildet sind, welches in abgesenkter Position wenigstens eine an dem Füllrohr angeordnete Austrittsöffnung verschließt und in angehobener Position die wenigstens eine Austrittsöffnung freigibt. Hierdurch wird ein Heraustropfen oder Nachtropfen von Elektrolytflüssigkeit aus dem Füllrohr nach Beendigung des Füllvorganges sicher verhindert.

Dabei ist die wenigstens eine Austrittsöffnung vorzugsweise an der Umfangswandung des Füllrohres angeordnet.

Im Falle, dass die Mittel zum Rückhalten von überschüssiger Elektrolytflüssigkeit als Saugpumpe, Unterdruckquelle oder dgl. ausgebildet sind, empfiehlt es sich nach einer anderen vorteilhaften Ausgestaltung der Erfindung, dass das Anschlussstück einen Querkanal oder eine Quer- beziehungsweise Radialbohrung aufweist, der oder die sich von einer Außenwandung des Anschlussstückes hin zum Axialkanal erstreckt. Dieser Querkanal kann bevorzugt in dem zum Axialkanal weisenden Endabschnitt verjüngt ausgebildet sein, um eine verstärke Förder- beziehungsweise Saugleistung bereitzustellen.

Dabei ist die Unterdruckquelle über eine Absaugleitung mit dem Querkanal verbunden.

Nach einer anderen vorteilhaften Weitebildung der Erfindung ist es vorgesehen, dass das Füllrohr im Bereich des freien Endes eine Verdickung, einen Ringbund oder dergleichen als Anschlag aufweist, der in einem erweiterten Axialabschnitt des Axialkanals aufgenommen ist. Der Ringabsatz zwischen dem erweiterten Axialabschnitt und dem das Füllrohr aufnehmenden Axialkanal dient sozusagen als Gegenanschlag am Anschlag am freien Ende des Füllrohres, wodurch die Position des Anschlussstücks in der abgesenkten Position exakt definiert beziehungsweise einstellbar ist. Von Vorteil ist das freie Ende des Füllrohres in der abgesenkten Position des Anschlussstücks in einem Abschnitt des erweiterten Axialabschnittes versenkt aufgenommen, wodurch die Saugwirkung beim Anziehen überschüssiger Elektrolytflüssigkeit weiter verbessert wird.

Von besonderem Vorteil ist es nach einem eigenständigen Aspekt der Erfindung, auch unabhängig von den sonstigen vorher erwähnten Maßnahmen vorgesehen, dass das freie Ende des Füllrohres in der abgesenkten Position etwa in Höhe des Querkanals positioniert ist. Aufgrund dieser Maßnahme ist sicher gestellt, dass jegliche Art der an der Innenbeziehungsweise Außenwandung haftende, überschüssige Elektrolytflüssigkeit über den Querkanal abgezogen wird.

Weiterhin hat es sich als vorteilhaft erwiesen, dass der Füllkopf einen Grundkörper aufweist, von dem sich das Füllrohr im wesentlichen vertikal nach unten erstreckt.

Nach einer anderen vorteilhaften Weiterbildung der Erfindung, bietet es sich an, dass auf das Anschlussstück eine Federvorspannung wirkt, die das Anschlussstück in Richtung der abgesenkten Position drängt. Obwohl in verschiedenen Fällen das Anschlussstück bereits aufgrund der Schwerkraft selbsttätig in die abgesenkte Position überführt wird, wenn die Füllvorrichtung nach Beendigung des Füllvorgangs der Zelle angehoben wird, erweist es sich in manchen Anwendungsfällen als vorteilhaft, dass Anschlussstück mittels einer Federvorspannung zu beaufschlagen, die das Anschlussstück in die abgesenkte Position zu überführen sucht. Im Falle, dass die Mittel zum Rückhalten von überschüssiger Elektrolytflüssigkeit von dem Anschlussstück gebildet werden, ist ein selbsttätiges Verschließen der wenigstens einen Austrittsöffnung beim Anheben des Füllkopfes von der Einfüllöffnung der Zelle erreicht.

Dabei kann es sich anbieten, dass die Federvorspannung von einer Druckfeder erzeugt wird, die zwischen Grundkörper und Anschlussstück eingespannt ist und bevorzugt das Füllrohr umfasst, wodurch die Druckfeder zusätzlich lagegesichert ist.

Nach einer anderen Ausgestaltung der Erfindung ist es vorgesehen, dass das Anschlussstück an der unteren Stirnseite Nuten, Rillen oder dergleichen besitzt, die im wesentlichen quer zum Axialkanal angeordnet sind. Diese Nuten oder Rillen stellen sicher, dass während des Befüllens der Zelle Druckunterschiede zwischen dem Inneren der Zelle und der äußeren Umgebung während des Füllvorganges ausgeglichen werden können.

Die Erfindung betrifft auch ein Füllverfahren zum Befüllen einer Zelle eines Akkumulators mit einer Elektrolytflüssigkeit mittels einer Füllvorrichtung. Dieses Füllverfahren zeichnet sich dadurch aus, dass der Füllkopf mit einer Handhabungseinrichtung, zum Beispiel einem Industrieroboter oder dergleichen, verbunden ist, welche den Füllkopf oberhalb der Einfüllöffnung der Zelle positioniert und dann den Füllkopf absenkt, so dass das Füllrohr in die Einfüllöffnung eintaucht, wobei das einer Stirnwandung der Zelle anliegende Anschlussstück von der abgesenkten Position in die angehobene Position überführt wird, die Zelle mit Elektrolytflüssigkeit befüllt, anschließend der Füllkopf angehoben und das Anschlussstück zurück in die abgesenkte Position überführt werden, wobei die wenigstens eine Austrittsöffnung des Füllrohres verschlossen wird. Alternativ oder zusätzlich kann auch mittels der Unterdruckwelle überschüssige, am Füllkopf beziehungsweise Füllrohr befindliche Elektrolytflüssigkeit über den Querkanal und die Absaugleitung abgezogen wird. Durch dieses Füllverfahren ist es sicher gestellt, dass nach Beendigung des Füllvorganges der Zelle des Akkumulators an der Füllvorrichtung, dem Füllkopf oder dem Füllrohr befindliche überschüssige Elektrolytflüssigkeit nicht nachtropft bzw. sicher und rasch entfernt wird, so dass insgesamt ein Abtropfen der aggressiven Elektrolytflüssigkeit von der Füllvorrichtung vermieden ist.

Weitere Ziele, Merkmale, Vorteile und Ausgestaltungen der Erfindung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: in schematischer Darstellung ein Ausführungsbeispiel der erfindungsgemäßen Füll-Vorrichtung, wobei der Füllkopf teilweise im Längsschnitt dargestellt ist und das Anschlussstück sich in der abgesenkten Position befindet,
- Figur 2: den Füllkopf der Figur 1 während des Füllvorganges, wobei sich das Anschlussstück in der angehobenen Position befindet,
- Figur 3: in schematischer Darstellung ein weiteres Ausführungsbeispiel der erfindungsgemäßen Füllvorrichtung und
- Figur 4: den Füllkopf der Figur 3 während des Füllvorganges

In den Figuren ist eine Füllvorrichtung zum Befüllen einer Zelle 9 eines Akkumulators mit Elektrolytflüssigkeit dargestellt.

Die Füllvorrichtung weist einen Füllkopf 1 auf, der einen Grundkörper 2 besitzt. Der Füllkopf 1 steht über eine Anschlussleitung 3 mit einem Elektrolytflüssigkeits-Reservoir 10 in Verbindung, wobei die Elektrolytflüssigkeit bei Bedarf mittels einer Pumpe oder dergleichen Fördermittel zum Füllkopf gefördert werden kann.

Weiterhin ist am Füllkopf 1 beziehungsweise dem Grundkörper 2 ein Füllrohr 4 vorgesehen, welches sich im vorliegenden Ausführungsbeispiel vertikal nach unten erstreckt mit einer Füllöffnung 22 für das Elektrolyt am freien Ende 15. Zum Befüllen einer oder mehreren Zellen 9 eines Akkumulators ist der Füllkopf 1 mit dem Füllrohr 4 in oder oberhalb einer Einfüllöffnung 11 der Zelle 9 positioniert.

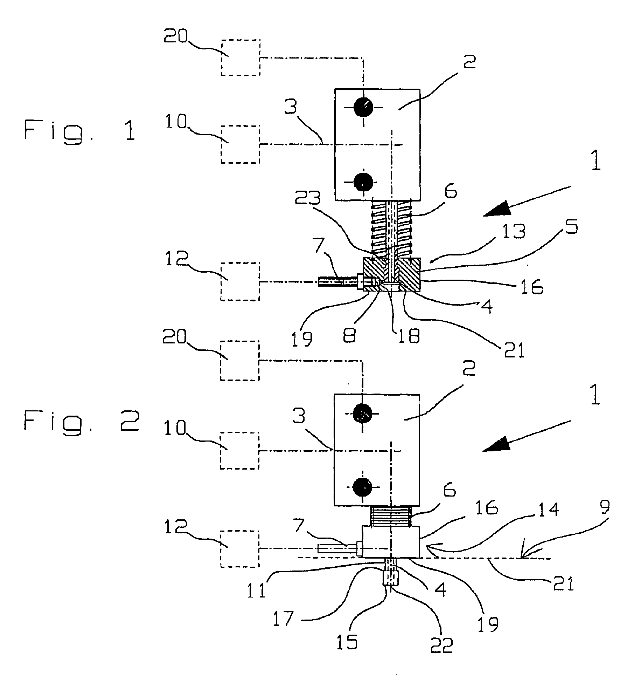

Weiterhin ist bei dem Ausführungsbeispiel gemäß Figuren 1 und 2 eine Saugpumpe, eine Unterdruckquelle 12 oder dergleichen zum Absaugen von überschüssiger Elektrolytflüssigkeit aus der Füllvorrichtung, dem Füllkopf 1 oder dem Füllrohr 4 nach Beendigung des Befüllens der Zelle 9 vorgesehen.

Das Füllrohr 4 weist ein Anschlussstück 5 auf, welches an die Unterdruckquelle 12 anschließbar ist. Das Anschlussstück 5 ist entlang des Füllrohres 4 von einer abgesenkten Position 13 gemäß Figur 1, die sich im Bereich des freien Endes 15 des Füllrohres 4 befindet, hin zu einer angehobenen Position 14 gemäß Figur 2 weg vom freien Ende 15 des Füllrohres 4 verstellbar. Das Anschlussstück, 5 umfasst das Füllrohr 4, insbesondere die Außenwandung des Füllrohres 4, ring- oder manschettenförmig und ist axial verschiebbar am Füllrohr 4 gelagert. Insoweit besitzt das Anschlussstück 5 einen Axialkanal 23 oder eine Axialbohrung, in der das Füllrohr 4 aufgenommen ist.

Wie aus Figur 1 ersichtlich, besitzt das Anschlussstück weiterhin einen Querkanal 8 oder einen Quer- beziehungsweise Radialbohrung, der oder die sich von einer Außenwandung 16 hin zu dem Axialkanal 23 erstreckt. Die Unterdruckquelle 12 ist über einen Absaugleitung 7 mit dem Querkanal 8 verbunden. Im Bereich des freien Endes 15 ist an dem Füllrohr 4 eine Verdickung, ein Ringkragen oder dergleichen als Anschlag 17 vorgesehen, der in einem erweiterten Axialabschnitt 18 des Axialkanals 23 aufgenommen ist. Die Ringstufe am oberen Ende des erweiterten Axialabschnitts 18 des Axialkanals 23 dient als Gegenanschlag zu dem Anschlag 17. Der Anschlag 17 und der zugeordnete Gegenanschlag sind derart bemessen beziehungsweise wirken derart zusammen, dass das freie Ende 15 des Füllrohres 4 in der Abgesenkten Position 13 etwa in der Höhe des Querkanals 8 positioniert ist, wie dies in Figur 1 dargestellt ist.

Obwohl das Anschlussstück 5 sich aus der angehobenen Position 14 gemäß Figur 2 beispielsweise unter ausschließlicher Wirkung der Schwerkraft selbsttätig in die abgesenkte Position 13 gemäß Figur 1 überführen lässt, ist es von Vorteil vorgesehen, dass auf das Anschlussstück 5 eine Federvorspannung wirkt, die das Anschlussstück 5 in Richtung der abgesenkten Position 13 drängt. Die Federvorspannung wird bevorzugt von einer Druckfeder 6 erzeugt, die zwischen Grundkörper 2 und Anschlussstück 5 eingespannt ist und nach dem vorliegenden Ausführungsbeispiel das Füllrohr 4 umfasst.

An der unteren Stirnseite 14 des Anschlussstücks 5 sind bevorzugt Nuten oder Rillen oder dergleichen vorgesehen, die sich quer zum Axialkanal 23 erstrecken und für einen Druckausgleich während des Füllvorganges der Zelle 9 sorgen. Ohne derartige Nuten oder Rillen, welche in den Figuren nicht dargestellt sind, könnte die Stirnseite 19 des Anschlussstückes 5 flächig einer Stirnwandung 21 der Zelle 9 anliegen und für einen Abdichtung des Innenvolumens des Zelle 9 nach außen sorgen, was unerwünscht ist. Insoweit dienen diese Nuten oder Rillen an der Stirnseite 19 für einen Druckausgleich während des Befüllens der Zelle 9 mit Elektrolytflüssigkeit.

Das Füllverfahren zum Befüllen einer oder mehreren Zellen 9 eines Akkumulators mit der oben beschriebenen Füllvorrichtung stellt sich wie folgt dar:

Der Füllkopf 1 wird beispielsweise mittels einer in den Figuren schematisch dargestellten Handhabungseinrichtung 21, etwa einem Industrieroboter oder dergleichen, oberhalb der Einfüllöffnung 11 der Zelle 9 positioniert. Anschließend wird der Füllkopf 1 abgesenkt, so dass das Füllrohr 4 in die Einfüllöffnung 11 eintauchen kann, wobei das einer Stirnwandung 21 der Zelle 9 bzw. seiner Einfüllöffnung mit seiner Stirnseite 19 anliegende Anschlussstück 5 von der abgesenkten Position 13 gemäß Figur 1 in die angehobene Position 14 gemäß Figur 2 überführt wird.

Anschließend wird dann die Zelle 9 durch Öffnen eines Ventils in der Anschlussleitung 3 oder durch Einschalten einer Fördereinrichtung mit Elektrolytflüssigkeit befüllt. Nachdem die Zelle 9 mit Elektrolytflüssigkeit befüllt ist, wird das Ventil geschlossen beziehungsweise die Fördereinrichtung abgeschaltet und anschließend der Füllkopf 1 angehoben, wobei das Anschlussstück 5 selbsttätig entweder aufgrund der Wirkung der Schwerkraft oder der Federvorspannung 6 von der angehobenen Position 14 zurück in die abgesenkte Position 13 überführt wird. Besonders günstig ist es, wenn das freie Ende 15 des Füllrohres 4 in der abgesenkten Position 13 im Bereich der Öffnung des Querkanals 8 positioniert ist.

Durch Einschalten der Unterdruckquelle 12, beispielsweise einer Saugpumpe, wird dann überschüssige, am Füllkopf 1 beziehungsweise Füllrohr 4 befindliche Elektrolytflüssigkeit über den Querkanal 8 und die Absaugleitung 7 abgezogen. Dabei wird Elektrolytflüssigkeit, welche sowohl an der Innenwandung als auch an der Außenwandung des Füllrohres haftet, sicher entfernt, so dass ein Nachtropfen von Elektrolytflüssigkeit nach Beendigung des Füllvorganges vermieden ist.

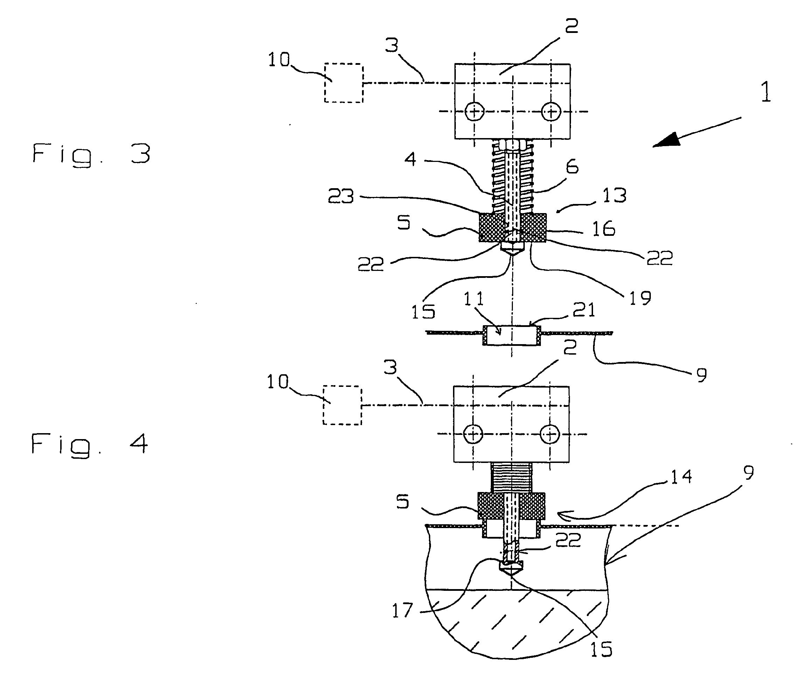

Figuren 3 und 4 zeigen einen weiteres Ausführungsbeispiel einer erfindungsgemäßen Füllvorrichtung, wobei die dem Ausführungsbeispiel gemäß Figuren 1 und 2 entsprechenden Teile mit gleichen Bezugszeichen versehen sind, so dass insoweit auf eine Beschreibung im einzelnen verzichtet werden kann.

Im Unterschied zu dem vorhergehenden Ausführungsbeispiel bildet das unter Federspannung stehende Anschlussstück selbst das Mittel zum Rückhalten von überschüssiger Elektrolytflüssigkeit nach Beendigung des Füllvorganges. Hierfür sind die Füllöffnungen 22 umfangsseitig im vorderen Bereich des Füllrohres 4 angeordnet. In abgesenkter Position 13 des Anschlussstückes 5 sind die Füllöffnungen 22 verschlossen. Dadurch, dass das Anschlussstück 5 stets unter der Spannung der Druckfeder 6 steht, erfolgt ein selbsttätiges Schließen der Füllöffnungen 22, sobald der Füllkopf 1 von der gefüllten Zelle 9 angehoben wird. Hierdurch ist ein Heraustropfen von Elektrolytflüssigkeit sicher verhindert.

Zum Füllen einer Zelle 9 wird dagegen der Füllkopf 1, bspw. mittels einer Handhabungseinrichtung 20, oberhalb der Einfüllöffnung 11 der Zelle 9 positioniert und danach abgesenkt, wobei das Füllrohr 4 in die Einfüllöffnung 11 eintaucht. Dabei gelangt die Stirnseite 19 des Anschlussstückes 5 in Anlagestellung an der Stirnwandung 21 der Einfüllöffnung 11 der Zelle 9, so dass das Füllstück 5 gegen die Kraft der Feder 6 relativ zum Füllrohr 4 nach oben geschoben wird. Dadurch werden die Füllöffnungen 22 freigegeben und das Einfüllen von Säure ermöglicht.

### Bezugszeichenliste

- 1: Füllkopf
- 2: Grundkörper
- 3: Anschlussleitung
- 4: Füllrohr
- 5: Anschlußstück
- 6: Druckfeder
- 7: Absaugleitung
- 8: Querkanal
- 9: Zelle
- 10: Reservoir
- 11: Einfüllöffnung
- 12: Unterdruckquelle
- 13: abgesenkte Position
- 14: angehobene Position
- 15: freies Ende
- 16: Außenwandung
- 17: Anschlag
- 18: Axialabschnitt
- 19: Stirnseite
- 20: Handhabungseinrichtung
- 21: stirnwandung
- 22: Füllöffnung
- 23: Axialkanal

## Patentansprüche

1. Füllvorrichtung zum Befüllen einer Zelle (9) eines Akkumulators mit Elektrolytflüssigkeit mit einem Füllkopf (1), der über eine Anschlussleitung (3) mit einem Elektrolytflüssigkeits- -Reservoir (10) in Verbindung steht und ein Füllrohr (4) besitzt, welches zum Befüllen in oder oberhalb einer Einfüllöffnung (11) der Zelle (9) positionierbar ist, und mit Mitteln zum Rückhalten von überschüssiger Elektrolytflüssigkeit aus dem Füllkopf (1) oder dem Füllrohr (4) nach Beendigung des Befüllens der Zelle (9), **dadurch gekennzeichnet, dass** das Füllrohr (4) ein Anschlussstück (5) aufweist, welches mit den Mitteln zum Rückhalten von überschüssiger Elektrolytflüssigkeit verbunden oder mit diesen Mitteln versehen ist und welches axial verschiebbar am Füllrohr (4) gelagert sowie entlang des Füllrohres (4) von einer abgesenkten Position (13) im Bereich des freien Endes (15) des Füllrohres (4) hin zu einer angehobenen Position (14) weg vom freien Ende (15) verstellbar ist, wobei sich das Anschlussstück (5) in der angehobenen Position (14) an einer Stirnwandung (21) der Zelle (9) abstützt.

2. Füllvorrichtung nach Anspruch 1, **dadurch gekennzeichnet, dass** das Anschlussstück (5) das Füllrohr (4), insbesondere eine Außenwandung des Füllrohrs (4), ring- oder manschettenförmig umfasst.

3. Füllvorrichtung nach Anspruch 1 oder 2, **dadurch gekennzeichnet, dass** das Anschlussstück (5) einen Axialkanal (23) oder einen Axialbohrung aufweist, in der das Füllrohr (4) aufgenommen ist.

4. Füllvorrichtung nach einem der vorhergehenden Ansprüche, **dadurch gekennzeichnet, dass** die Mittel zum Rückhalten von überschüssiger Elektrolytflüssigkeit von dem Anschlussstück (5) gebildet sind, welches in abgesenkter Position (13) wenigstens eine an dem Füllrohr (4) angeordnete Füllöffnung (22) verschließt und in angehobener Position (14) diese wenigstens eine Austrittsöffnung (22) freigibt.

5. Füllvorrichtung nach Anspruch 4, **dadurch gekennzeichnet, dass** die wenigstens eine Austrittsöffnung (22) an der Umfangswandung des Füllrohres (4) angeordnet ist.

6. Füllvorrichtung nach einem der vorhergehenden Ansprüchen, **dadurch gekennzeichnet, dass** die Mittel zum Rückhalten von überschüssiger Elektrolytflüssigkeit als Saugpumpe, Unterdruckquelle (12) oder dgl. Absaugeinrichtung ausgebildet sind und das Anschlussstück (5) einen Querkanal (8) oder eine Quer- beziehungsweise Radialbohrung aufweist, der oder die sich von einer Außenwandung (16) des Anschlussstücks (5) hin zum Axialkanal (23) erstreckt.

7. Füllvorrichtung nach Anspruch 6, **dadurch gekennzeichnet, dass** die Unterdruckquelle (13) über eine Absaugleitung (7) mit dem Querkanal (8) verbunden ist.

8. Füllvorrichtung nach einem der vorhergehenden Ansprüche, **dadurch gekennzeichnet, dass** das,Füllrohr (4) im Bereich des freien Endes (15) einen Verdickung, einen Ringbund oder dergleichen als Anschlag (17) aufweist, der in abgesenkter Position (13) an der Stirnseite (19) des Anschlussstückes (5) im Bereich seines Axialkanals (23) anliegt oder in einem erweiterten Axialabschnitt (18) des Axialkanals (23) des Anschlussstückes (5) aufgenommen ist.

9. Füllvorrichtung nach einem der vorhergehenden Ansprüche, **dadurch gekennzeichnet, dass** das freie Ende (15) des Füllrohres (4) in der abgesenkten Position (13) etwa in der Höhe des Querkanals (8) positioniert ist.

10. Füllvorrichtung nach einem der vorhergehenden Ansprüche, **dadurch gekennzeichnet, dass** der Füllkopf (1) einen Grundkörper (2) aufweist, von dem sich das Füllrohr (4) im wesentlichen vertikal nach untern erstreckt.

11. Füllvorrichtung nach einem der vorhergehenden Ansprüche, **dadurch gekennzeichnet, dass** auf das Anschlussstück (5) eine Federvorspannung wirkt, die das Anschlussstück (5) in Richtung der abgesenkten Position (13) drückt.

12. Füllvorrichtung nach einem der vorhergehenden Ansprüche, **dadurch gekennzeichnet, dass** eine Federvorspannung von einer Druckfeder (6) erzeugt wird, die zwischen Grundkörper (2) und Anschlussstück (5) eingespannt ist und bevorzugt das Füllrohr (4) umfasst.

13. Füllvorrichtung nach einem der vorhergehenden Ansprüche, **dadurch gekennzeichnet, dass** das Anschlussstück (5) an der unteren Stirnseite (19) Nuten, Rillen oder dergleichen besitzt, die quer zum Axialkanal (23) angeordnet sind.

14. Füllverfahren mit einer Füllvorrichtung nach einem der vorhergehenden Ansprüche, **dadurch gekennzeichnet, dass** der Füllkopf (1) mit einer Handhabungseinrichtung (20), zum Beispiel einem Industrieroboter oder dergleichen verbunden ist, welche den Füllkopf (1) oberhalb der Einfüllöffnung (11) der Zelle (9) positioniert und dann den Füllkopf (1) absenkt, so dass das Füllrohr (4) in die Einfüllöffnung (11) eintaucht, wobei das einer Stirnwandung (21) der Zelle (9) anliegende Anschlussstück (5) von der abgesenkten Position (13) in die angehobene Position (14) überführt wird, die Zelle (9) mit Elektrolytflüssigkeit befüllt, anschließend der Füllkopf (1) angehoben und das Anschlussstück (5) zurück in die abgesenkte Position (13) überführt werden, wobei die wenigstens eine Austrittsöffnung (22) des Füllrohres (4) mittels des Anschlussstückes (5) verschlossen wird.

15. Füllverfahren nach einem der vorhergehenden Ansprüche, **dadurch gekennzeichnet, dass** der Füllkopf (1) mit einer Handhabungseinrichtung (20), zum Beispiel einem Industrieroboter oder dergleichen verbunden ist, welche den Füllkopf (1) oberhalb der Einfüllöffnung (11) der Zelle (9) positioniert und dann den Füllkopf (1) absenkt, so dass das Füllrohr (4) in die Einfüllöffnung (11) eintaucht, wobei das einer Stirnwandung (21) der Zelle (9) anliegende Anschlussstück (5) von der abgesenkten Position (13) in die angehobene Position (14) überführt wird, die Zelle (9) mit Elektrolytflüssigkeit befüllt, anschließend der Füllkopf (1) angehoben und das Anschlussstück (5) zurück in die abgesenkte Position (13) überführt werden, worauf mittels der Unterdruckquelle (12) überschüssige, am Füllkopf (1) beziehungsweise Füllrohr (4) befindliche Elektrolytflüssigkeit über den Querkanal und die Absaugleitung abgesaugt wird.

## Claims

1. Filling device for filling a cell (9) of a battery with electrolyte liquid, with a filling head (1) connected by way of a connecting line (3) with an electrolyte liquid reservoir (10) and comprising a filling pipe (4), which for the filling is positionable in or above a filling opening (11) of the cell (9), and with means for retaining excess electrolyte liquid from the filling head (1) or the filling pipe (4) after the conclusion of the filling of the cell (9), **characterised in that** the filling pipe (4) has a connecting member (5) which is connected with the means for retaining the excess electrolyte liquid or is provided with these means and which is mounted at the filling pipe (4) to be axially displaceable as well as adjustable along the filling pipe (4) from a lowered position (13) in the region of the free end (15) of the filling pipe (4) to a raised position (14) remote from the free end (15), wherein the connecting member (5) is supported in the raised position (14) at an end wall (21) of the cell (9).

2. Filling device according to claim 1, **characterised in that** the connecting member (5) surrounds the filling pipe (4), particularly an outer wall of the filling pipe (4), in the manner of a ring or a sleeve.

3. Filling device according to claim 1 or 2, **characterised in that** the connecting member (5) has an axial channel (23) or an axial bore in which the filling pipe (4) is received.

4. Filling device according to one of the preceding claims, **characterised in that** the means for retaining excess electrolyte liquid are formed by the connecting member (5) which in lowered position (13) closes at least one filling opening (22) arranged at the filling pipe (4) and in raised position (14) frees this at least one outlet opening (22).

5. Filling device according to claim 4, **characterised in that** the at least one outlet opening (22) is arranged at the circumferential wall of the filling pipe (4).

6. Filling device according to one of the preceding claims, **characterised in that** the means for retaining excess electrolyte liquid are constructed as a suction pump, underpressure source (12) or like suction device and the connecting member (5) has a transverse channel (8) or a transverse or radial bore, which extends from an outer wall (16) of the connecting member (5) to the axial channel (23).

7. Filling device according to claim 6, **characterised in that** the underpressure source (13) is connected with the transverse channel (8) by way of a suction line (7).

8. Filling device according to one of the preceding claims, **characterised in that** the filling pipe (4) has in the region of the free end (15) a thickening, an annular collar or the like as abutment (17), which in the lowered position (13) bears against the end face (19) of the connecting member (5) in the region of its axial channel (23) or is received in an enlarged axial section (18) of the axial channel (23) of the connecting member (5).

9. Filling device according to one of the preceding claims, **characterised in that** the free end (15) of the filling pipe (4) in the lowered position (13) is positioned approximately at the level of the transverse channel (8).

10. Filling device according to one of the preceding claims, **characterised in that** the filling head (1) comprises a base body (2) from which the filling pipe (4) extends substantially vertically downwardly.

11. Filling device according to one of the preceding claims, **characterised in that** a spring bias pressing the connecting member (5) in the direction of the lowered position (13) acts on the connecting member (5).

12. Filling device according to one of the preceding claims, **characterised in that** a spring bias is produced by a compression spring (6) which is clamped in place between base body (2) and connecting member (5) and preferably embraces the filling pipe (4).

13. Filling device according to one of the preceding claims, **characterised in that** the connecting member (5) has at the lower end face (19) grooves, flutes or the like arranged transversely to the axial channel (23).

14. Filling method with a filling device according to one of the preceding claims, **characterised in that** the filling head (1) is connected with a handling device (20), for example an industrial robot or the like, which positions the filling head (1) above the filling opening (11) of the cell (9) and then lowers the filling head (1) so that the filling head (4) dips into the filling opening (11), wherein the connecting member (5), which bears against an end wall (21) of the cell (9), is transferred from the lowered position (13) to the raised position (14), the cell (9) is filled with electrolyte liquid, subsequently the filling head (1) is raised and the connecting member (5) transferred back to the lowered position (13), wherein the at least one outlet opening (22) of the filling pipe (4) is closed by means of the connecting member (5).

15. Filling method according to one of the preceding claims, **characterised in that** the filling head (1) is connected with a handling device (20), for example an industrial robot or the like, which positions the filling head (1) above the filling opening (11) of the cell (9) and then lowers the filling head (1) so that the filling pipe (4) dips into the filling opening (11), wherein the connecting member (5), which bears against an end wall (21) of the cell (9), is transferred from the lowered position (13) to the raised position (14), the cell (9) is filled with electrolyte liquid, subsequently the filling head (1) is raised and the connecting member (5) transferred back to the lowered position (13), whereupon excess electrolyte liquid disposed at the filling head (1) or filling pipe (4) is sucked away via the transverse channel and the suction line by means of the underpressure source (12).

## Revendications

1. Dispositif destiné au remplissage d'une cellule (9) d'un accumulateur avec un liquide électrolytique, ayant une tête de remplissage (1) qui est reliée à un réservoir de liquide électrolytique (10) par une conduite de raccordement (3) et qui possède un tuyau de remplissage (4) qui peut être positionné aux fins du remplissage à l'intérieur ou au-dessus d'une ouverture de remplissage (11) de la cellule (9), et ayant des moyens destinés à retenir le liquide électrolytique excédentaire à l'extérieur de la tête de remplissage (1) ou du tuyau de remplissage (4) après la fin du remplissage de la cellule (9), **caractérisé en ce que** le tuyau de remplissage (4) présente une pièce de raccordement (5) qui est reliée aux moyens destinés à retenir le liquide électrolytique excédentaire ou qui est munie de ces moyens, et qui est montée de façon mobile en direction axiale sur le tuyau de remplissage (4) et peut être réglée le long du tuyau de remplissage (4) depuis une position basse (13) dans la zone de l'extrémité libre (15) du tuyau de remplissage (4) jusqu'à une position haute (14) à l'opposé de l'extrémité libre (15), la pièce de raccordement (5) prenant appui dans la position haute (14) sur une paroi frontale (21) de la cellule (9).

2. Dispositif de remplissage selon la revendication 1, **caractérisé en ce que** la pièce de raccordement (5) entoure le tuyau de remplissage (4), en particulier une paroi extérieure du tuyau de remplissage (4), sous la forme d'une bague ou d'une manchette.

3. Dispositif de remplissage selon l'une quelconque des revendications 1 ou 2, **caractérisé en ce que** la pièce de raccordement (5) présente un canal axial (23) ou un alésage axial dans lequel est logé le tuyau de remplissage (4).

4. Dispositif de remplissage selon l'une quelconque des revendications précédentes, **caractérisé en ce que** les moyens destinés à retenir le liquide électrolytique excédentaire sont formés par la pièce de raccordement (5), qui dans la position basse (13) obture au moins une ouverture de remplissage (22) agencée sur le tuyau de remplissage (4) et dans la position haute (14) débloque au moins une ouverture de sortie (22).

5. Dispositif de remplissage selon la revendication 4, **caractérisé en ce que** l'ouverture de sortie (22), au moins au nombre d'une, est agencée sur la paroi périphérique du tuyau de remplissage (4).

6. Dispositif de remplissage selon l'une quelconque des revendications précédentes, **caractérisé en ce que** les moyens destinés à retenir le liquide électrolytique excédentaire sont réalisés en tant que pompe d'aspiration, source de dépression (12) ou dispositif d'aspiration similaire, et la pièce de raccordement (5) présente un canal transversal (8) ou un alésage transversal ou radial, qui s'étend depuis une paroi extérieure (16) de la pièce de raccordement (5) jusqu'au canal axial (23).

7. Dispositif de remplissage selon la revendication 6, **caractérisé en ce que** la source de dépression (13) est reliée au canal transversal (8) par le biais d'une conduite d'aspiration (7).

8. Dispositif de remplissage selon l'une quelconque des revendications précédentes, **caractérisé en ce que** le tuyau de remplissage (4) présente dans la zone de l'extrémité libre (15) un épaississement, un collet annulaire ou un élément similaire en tant que butée (17), qui prend appui dans la position basse (13) sur le côté frontal (19) de la pièce de raccordement (5) dans la zone de son canal axial (23) ou qui est logé dans une section axiale élargie (18) du canal axial (23) de la pièce de raccordement (5).

9. Dispositif de remplissage selon l'une quelconque des revendications précédentes, **caractérisé en ce que** l'extrémité libre (15) du tuyau de remplissage (4) est positionnée dans la position basse (13) sensiblement à la hauteur du canal transversal (8).

10. Dispositif de remplissage selon l'une quelconque des revendications précédentes, **caractérisé en ce que** la tête de remplissage (1) présente un corps de base (2) à partir duquel le tuyau de remplissage (4) s'étend sensiblement verticalement vers le bas.

11. Dispositif de remplissage selon l'une quelconque des revendications précédentes, **caractérisé en ce qu'**une précontrainte de ressort, qui comprime la pièce de raccordement (5) dans la direction de la position basse (13), s'exerce sur la pièce de raccordement (5).

12. Dispositif de remplissage selon l'une quelconque des revendications précédentes, **caractérisé en ce qu'**une précontrainte de ressort est produite par un ressort de pression (6) qui est tendu entre le corps de base (2) et la pièce de raccordement (5) et qui entoure de préférence le tuyau de remplissage (4).

13. Dispositif de remplissage selon l'une quelconque des revendications précédentes, **caractérisé en ce que** la pièce de raccordement (5) possède sur le côté frontal inférieur (19) des rainures, des cannelures ou des éléments similaires qui sont agencés transversalement par rapport au canal axial (23).

14. Procédé de remplissage à l'aide d'un dispositif de remplissage selon l'une quelconque des revendications précédentes, **caractérisé en ce que** la tête de remplissage (1) est reliée à un dispositif de manipulation (20), par exemple un robot industriel ou similaire, qui positionne la tête de remplissage (1) au-dessus de l'ouverture de remplissage (11) de la cellule (9) et abaisse ensuite la tête de remplissage (1), de telle sorte que le tuyau de remplissage (4) pénètre dans l'ouverture de remplissage (11), tandis que la pièce de raccordement (5) prenant appui sur une paroi frontale (21) de la cellule (9) est déplacée de la position basse (13) dans la position haute (14), la cellule (9) est remplie de liquide électrolytique, puis la tête de remplissage (1) est relevée et la pièce de raccordement (5) est ramenée dans la position basse (13), l'ouverture de sortie (22), au moins au nombre d'une, du tuyau de remplissage (4) étant obturée au moyen de la pièce de raccordement (5).

15. Procédé de remplissage selon l'une quelconque des revendications précédentes, **caractérisé en ce que** la tête de remplissage (1) est reliée à un dispositif de manipulation (20), par exemple un robot industriel ou similaire, qui positionne la tête de remplissage (1) au-dessus de l'ouverture de remplissage (11) de la cellule (9) et abaisse ensuite la tête de remplissage (1), de telle sorte que le tuyau de remplissage (4) pénètre dans l'ouverture de remplissage (11), tandis que la pièce de raccordement (5) prenant appui sur une paroi frontale (21) de la cellule (9) est déplacée de la position basse (13) dans la position haute (14), la cellule (9) est remplie de liquide électrolytique, puis la tête de remplissage (1) est relevée et la pièce de raccordement (5) est ramenée dans la position basse (13), après quoi le liquide électrolytique excédentaire se trouvant sur la tête de remplissage (1) ou le tuyau de remplissage (4) est aspiré au moyen de la source de dépression (12) par le biais du canal transversal et de la conduite d'aspiration.
